# EUROPEAN PATENT APPLICATION

(11) **EP 1 369 649 A1**
(43) Date of publication of application: **10.12.2003**
(21) Application number: 02388039.6
(22) Date of filing: 07.06.2002
(51) Int. Cl.: F25C 1/24

(54) **Pre-filled ice cube bag**

(71) Applicant: UniGreen International A/S, 3490 Kvistgard (DK)
(72) Inventor: Vangedal-Nielsen, Erling, 2950 Vedbaek (DK)
(74) Representative: Nielsen, Henrik Sten

(57) **Abstract**

A pre-filled ice cube bag (10,10',10'',10''') containing freezable material comprises two sheet-shaped foil layers (12) having substantially identical geometrical configurations and defining an outer periphery. The two sheet-shaped foil layers (12) each defines a surface area of a minimum of 75 cm², such as 75-150 cm², 150-300 cm², 300-600cm², 600-1200 cm² or 1200-2400 cm² or alternatively an area between 75 cm² and 2400 cm², such as between 150 and 1200 cm², such as between 150 and 600 cm². In the bag, a peripheral joint (14,16,18) extends along the outer periphery of the foil layers, which peripheral joint joins the foil layers together mainly overlapping each other and defining a sealed inner chamber in the interior of the bag. In the inner chamber the freezable material is hermetically contained. The inner chamber defines a given inner volume when the two sheet-shaped foil layers are inflated to a maximum at a given maximum pressure of not less than 0.5m water column pressure, preferably 0.5-1m or 1-1.5m or 1.5-2m water column pressure and is divided into two or more ice cube compartments (32) which are defined in relation to one another by separate joints of the foil layers where the inner volume constitutes a volume of a minimum of 50 cm³, such as 50-100 cm³, 100-200 cm³, 200-300 cm³, 300-400cm³, 400-500 cm³, 500-1000cm³ or 1000-2000 cm³ or alternatively between 50 and 2000 cm³, such as 100-1000 cm³, preferably between 100 and 500 cm³. The freezable material constitutes a filling of no less than 80% of the inner volume in a non-frozen condition, but less than 91%, such as 80%-91%, preferably 80-95%, 85%-87%, 87%-89% or 89%-91%.

## Description

The present invention relates to the technical field of ice cube bags or equivalent bags or techniques and more particularly a pre-filled ice cube bag containing freezable material.

Numerous ice cube bags are known within this technical field, e.g. from US 3,207,420, US Re. 31.890, US 4,822,180 corresponding to European patent No. 0 264 407, published European patent application No. 0 129 072, international patent application, publication No. WO 87/01183 corresponding to European patent No. 0 248 817, international patent application, publication No. WO 86/04561, international patent application, publication No. WO 92/15491 corresponding to European patent 0 574 49 and published European patent application No. 0 619 948, and Danish patent No. PR 172.066 corresponding to published European patent application No. 0 795 393.

In these numerous publications to which reference is made and which are hereby incorporated in this present specification by reference, a large number of ice cube bag constructions of different embodiments having different closure devices are described, including knot closure, self-closure etc. Within this technical field it is commonly known that ice cube bags may either be glued or welded, the above mentioned Danish patent and the corresponding published European patent application describing an industrial method for production of ice cube bags having continuous or intermittent weldings.

In international patent application, publication No. WO 87/01183 and corresponding European patent No. 0 248 817, an ice cube bag construction is described, in which glueing is used for establishing joints in the interior of the ice cube bag. The joints are later on relatively easy to separate again enabling a conversion of the ice cube bag from an ice cube bag divided into compartments into a non-compartmentalized ice cube bag.

From Danish patent No. PR 172.638 corresponding to published international patent application, publication No. WO 99/32840 and corresponding to published European patent application No. 0 927 859 a technique is known for producing an ice cube bag which is easy to open for the user, the foil layers of the ice cube bags being welded together along the periphery and further connected through individual point-shaped or similar joints serving the purpose of producing a simple opening of the ice cube bag demanding only little strength, the content of the ice cube bag being frozen, as the point-shaped weldings produce a tearing in one of the two foil layers and thereby a perforation for the opening of the ice cube bag to take out the ice cubes contained in the interior of the ice cube bag.

The ice cube bags described above are all primarily intended to be sold in non-filled condition from the producer to the user, i.e. the individual households or similarly the user, e.g. restaurant, cafe, workplace etc., where a filling of the ice cube bag with its content takes place, preferably with water before the freezing of the ice cube bag with its content. A steadily increasing problem consists in actually being able to provide clean water which can immediately be used for the production of ice cubes. In great parts of the industrialised world and also in the underdeveloped countries, the water from a tap is not suitable for drinking and the immediate use of the above described ice cube bags to be filled with water from a tap is therefore not safe and advisable.

In several of the above described publications it is stated, by way of suggestion, that the ice cube bags can be pre-filled in stead of being filled by the final user, i.e. filled at a tapping site after which the ice cube bag is sealed. However, in these publications it is not further stated which conditions are critical in relation to such a filling of the ice cube bag prior to the sealing of the ice cube bag, and in this connection in particular, the conditions that are critical regarding the securing of the pre-filled ice cube bag so that it is not unintentionally teared during the transportation and the storage or destroyed in another connection. Similarly, it is not mentioned anywhere in these publications how the filling is to be carried out and how much the ice cube bag, if occasion should arise, is to be filled prior to the sealing, as a pre-filling of the ice cube bag before sealing, in particular when filling mechanically, naturally enables a much more exact and complete filling of the ice cube bag compared to the manual filling which is carried out by the final user when the above described ice cube bags are filled by the spout of a tap.

The object of the present invention is thus to provide a pre-filled ice cube bag containing freezable material, which pre-filled ice cube bag meets the requirements which must be put forward to such a pre-filled ice cube bag with freezable material to ensure that the pre-filled ice cube bag is neither teared or destroyed during the transportation and the storage, nor destroyed during the freezing due to an overfilling of the ice cube bag.

Therefore, considerations which the inventor of the present invention has made through several experiments and realisations through quite a long career within this technical field, are at the basis of this object.

The above mentioned object is obtained in accordance with the teachings of the invention with a pre-filled ice cube bag with content, which pre-filled ice cube bag with content in accordance with the present invention comprises: two sheet-shaped foil layers having substantially identical geometrical configurations and defining an outer periphery, each of the two sheet-shaped foil layers defining a surface area of a minimum of 75 cm², such as 75-150 cm², 150-300 cm², 300-600 cm², 600-1200 cm² or 1200-2400 cm² or alternatively an area between 75 cm² and 2400 cm², such as between 150 and 1200 cm², such as between 150 and 600 cm², a peripheral joint extending along said outer periphery of the foil layers and which peripheral joint joins the foil layers together mainly overlapping each other and defining a sealed inner chamber in the interior of the bag, in which inner chamber said freezable material is hermetically contained, the inner chamber defining a given inner volume when the two sheet-shaped foil layers are inflated at a maximum at a given maximum pressure of no less than 0.5m of water column pressure, preferably 0.5-1 m or 1-1.5m or 1.5-2m of column of water column pressure, and divided into two or more ice cube chambers defined in relation to each other by separate joints of the foil layers, where said inner volume constitutes a volume of a minimum of 50 cm³, such as 50-100 cm³, 100-200 cm³, 200-300 cm³, 300-400 cm³_{,} 400-500 cm³, 500-1000 cm³ or 1000-2000 cm³, or alternatively between 50 and 2000 cm³, such as 100-1000 cm³, preferably between 100 and 500 cm³ and which freezable material constitutes a filling of no less than 80% of said inner volume in a non-frozen condition, but less that 91%, such as 80-91%, preferably 80%-85% 85%-87%, 87%-89% or 89%-91 %.

The present invention is based on the realisation that the pre-filled ice cube bag is to resist a given pressure when the ice cube bag is filled and, during transportation, is subject to any action that locally is greater than the water column pressure that the actual content of the bag provides. Simultaneously, the inventor has realised that a pre-filled ice cube bag is to be filled approximately at a maximum to ensure that the content of the ice cube bag does not, as a result of external influences produces movements of the content during transportation being so strong that these movements produce a tearing of the ice cube bag ensuring at the same time that the ice cube bag is not overfilled and thereby torn or destroyed when being frozen as a consequence of the expansion of the freezable material, i.e. as a result of the expansion of the water during the freezing process. These conditions are complied with when the ice cube bag is elaborated in such a way that it can resist a maximum pressure of no less than 0.5 water column pressure, preferably 0.5-1m or 1-1.5m or 1.5-2m water column pressure or more, and when the freezable material produces a filling of no less than 80%, but less than 91% of the inner volume of the ice cube bag.

The freezable material contained in the pre-filled ice cube bag can, in accordance with the two alternative embodiments of the pre-filled ice cube bag according to the present invention be contained in an evacuated condition in the inner chamber or alternatively in a non-evacuated condition in the inner chamber. In this connection it is to be noticed that a filling of the pre-filled ice cube bag in an evacuated condition enables a larger filling compared to a filling in a non-evacuated condition, as the pre-filled ice cube bag with freezable material contained in an evacuated condition can be filled without regard to the content of an excess of air in the bag which, as a result of the expansion of the freezable material during the freezing process when the pre-filled ice cube bag contains the freezable material in a non-evacuated condition, will provide an increased pressure in the interior of the ice cube bag as a result of the reduced volume which will be at the disposal of the excess of air.

The content of the pre-filled ice cube bag according to the present invention is preferably water, in particular mineral water filled free of bacteria, possibly sterilized, to ensure that the pre-filled ice cube bag containing water, in particular mineral water, does not contain bacteria and thus is at the disposal to the user for supplying ice cubes produced with water free from bacteria and thus water that is not injurious to the health.

The filling of water or mineral water can be carried out under sterilization, e.g. by warming the water at a temperature above the point of pasteurization, i.e. at a temperature above 85° prior to the filling or alternatively, as it is permitted certain places in the industrialised world, by irradiating the water from a radioactive isotope source. As it will be discussed below certain embodiments of the pre-filled ice cube bag with freezable content also enables an actual autoclaving of the bag after filling the bag, in particular with water or mineral water.

The content of the pre-filled ice cube bag according to the present invention can alternatively consist of aqueous foodstuff, such as a pasty material, e.g. ice cream, egg yolks or egg whites, creams, sauces, mayonnaise or remoulade, fruit juice, fruit purée, i.e. products made from fruits, such as different berries or types of fruits etc., as well as dairy products, such as milk, yoghurt or other foodstuff products. It is to be noted in this connection that the pre-filled ice cube bag according to the present invention can be produced and distributed in a frozen condition.

In accordance with the realisation at the basis of the present invention being that the pre-filled ice cube bag is to resist the effects that the freezable material contained in the pre-filled ice cube bag has on the sheet-shaped foil layers and the joints between these during the transportation, the pre-filled ice cube bag is compartmentalised. In this context it is preferred that the individual ice cube compartment containing one part of the freezable material constitutes a fairly small volume, so that the freezable material contained within this fairly small volume, determined by the minor weight of the concerned material, only carries out a relatively limited pressure or a relatively limited force application on a limited area of the sheet-shaped foil layers and the joints between these. Consequently, in accordance with this realisation the individual ice cube compartment must have a sub-volume that does not exceed 25 cm³, preferably not exceeding 20 cm³ or further preferably is of the approximate size of 10 cm³.

The pre-filled ice cube bag according to the present invention can, in accordance with the techniques described in the above mentioned publications, be produced with arbitrary suitable materials, in particular plastic materials and especially polyethylene, preferably LDPE, MDPE or HDPE or another glueable or weldable foil material, preferably plastic or polymer foil material or aluminium foil material or combinations of such foil materials, including laminated co-extruded polymer materials.

In accordance with the teachings of the present invention the use of co-extruded polymer materials enables the implementation of the pre-filled ice cube bag when using a multi-ply foil, where the single layers of the multi-ply foil material can comply with different objects, including the production of an acceptable contact material in relation to the contained freezable material, a printing medium which is contained between the inner and the external layer, gas barrier layer or water barrier layer established by an inner or external layer, like the selection of e.g. the inner or alternatively the external layer can make the production of a pre-filled ice cube bag with content possible, which bag after filling can be sterilised by heating it at a temperature above the pasteurization temperature. A combination of plastic or aluminium foil material also enables the establishment of a construction, in which the aluminium foil material produces a temperature resistant barrier which enables the above mentioned temperature treatment of the content, i.e. a pasteurization of the content after filling.

In accordance with the presently preferred embodiment of the pre-filled ice cube bag, the individual ice cube bag is contained in a sealed and gas proof packaging, preferably a gas proof plastic bag, such as a plastic bag produced from PA, PP laminated and co-extruded plastic foils or metallized PE or PVC. This external sealed and gas proof packaging serves the purpose of double securing so that the freezable material, in the event that the pre-filled ice cube bag during the transportation should unfortunately leak, constitutes an external encapsulation in which the freezable material leaking from the pre-filled ice cube bag is received and retained. Furthermore, the external sealed and gas proof packaging serves the purpose of securing and protecting the pre-filled ice cube bag's sheet material against light, in particular UV radiation in sunlight and further produces a gas proof sealing, thus preventing the interior of the gas proof packaging from giving off gas to the environment or from absorbing gasses, in particular odours or maybe bacteria from the environment. In those cases where the pre-filled ice cube bag is produced from a non-gas proof material, e.g. polyethylene, the external sealed and gas proof packaging thus also serves the purpose of preventing the degassing of the freezable material contained within the ice cube bag, whereby the lifetime of the content is extended. The mentioned external packaging or gas proof gas bag can, in accordance with two alternative embodiments, be filled with air or alternatively evacuated, which, corresponding to the above discussion of the evacuated and non-evacuated filling of the pre-filled ice cube bag itself presents the same advantages at the evacuated and the non-evacuated or hermetical external packaging, respectively. Furthermore, this external packaging can, due both to reasons of manipulation and to light barrier reasons, be contained in an external box, e.g. an external box made of cardboard or paper.

Moreover, the mentioned external sealed and gas proof packaging can be adapted to not only contain a single pre-filled ice cube bag a freezable content, but can, in accordance with the teachings of the present invention consist of a number of pre-filled ice cube bags, such as 2, 4, 6, 8, 10 or 12 pre-filled ice cube bags.

The pre-filled ice cube bag according to the present invention may in accordance with alternative embodiments be provided with or configurated with a large or a small number of ice cube compartments, i.e. be provided with two or more ice cube compartments. In certain embodiments the ice cube bag may have a very limited number of individual ice cube compartments, e.g. two, three or four ice cube compartments.

In the presently preferred embodiments of the ice cube bag according to the present invention, however, it preferably demonstrates a larger number of ice cube compartments, i.e. a larger number than four, e.g. 6, 8, 10, 12, 14, 16, 18, 20, 22, 24, 30 or 36 ice cube compartments, configurations with an odd number of ice cube compartments, e.g. 15 or 21 ice cube compartments being also possible. An embodiment of the ice cube bag according to the present invention having one single ice cube compartment defined in the interior of the ice cube bag and having, maybe, a special geometry, e.g. corresponding to the logo of a company, may furthermore be implemented for special purposes.

The individual ice cube compartments in the pre-filled ice cube bag may be individually defined by the individual joints, but may alternatively be grouped in separate sub-compartments, thereby making it possible by opening or tearing apart of the ice cube bag only to take out a limited number of ice cubes from the ice cube bag instead of taking out all the ice cubes from the ice cube bag.

The mentioned individual joints can have the configuration of ellipses, lines, triangles, rectangles, squares, polygons, arbitrary convex or concave contour defining configurations or combinations of any of the above mentioned configurations, point weldings, line segment configurated weldings or area or plane configurated weldings.

Provided the joints between the sheet-shaped foil layers are configurated as area or plane configurated weldings, it is preferred that the individual area or plane shaped joint has a central non-joint area implying that this area or plane shaped welding is actually solely constituted by a circumferential line welding placed along the periphery of the given area or plane shaped contour. Thus, a safety is obtained of the joining of the welding between the two sheet-shaped foil layers being carried out in a safe and reliable way without any risk of destruction of the materials as a consequence of a too strong heating action.

Even though the pre-filled ice cube bag according to the present invention may be produced from arbitrarily configurated sheet-shaped foil layers per se, including non-rectangular foil layers, e.g. elliptical, polygonal or triangular foil sheets, it is preferred that the two sheet-shaped foil layers are mainly rectangular.

The two sheet-shaped foil layers of which the pre-filled ice cube bag is produced may be produced from the same foil material and having the same thickness, or the two sheet-shaped foil layers may, alternatively, in accordance with the teachings of the present invention, be produced from different foil materials and/or produced from a foil material or foil materials of a different thickness. Especially in the last mentioned case, where one of the sheet-shaped foil layers has a larger thickness than the second sheet-shaped foil layer, this larger foil layer can be made with recesses pre-configurated in the foil material corresponding to the individual freezing compartments, whereby a blister package resembling construction is produced, from which the frozen material can be taken, in particular the frozen ice cubes, by pressing each ice cube out through the thinner foil layer by executing a pressure from the backside of the foil layer having a larger thickness. The pre-configurated recesses in the foil materials can, moreover, be marked or configurated as a specific figure or configuration.

In order to produce an easy and simple withdrawal of the frozen material from the pre-filled ice cube bag after freezing the freezable material, tearing perforations, in particular border perforations in one or both of the sheet-shaped foil layers, may be indicated, further or alternatively to the above described blister package or alternatively to the below described complete tearing weldings corresponding to the weldings described in the above mentioned Danish patent PR 172 638, for the indication and the tearing up of the pre-filled ice cube bag.

In accordance with the teachings of the present invention and in order to ease the manipulation of the pre-filled ice cube bag both before and after the freezing process, the elaboration of an extension of one or both of the sheet-shaped foil layers can be carried out for the production of a gripping flap which the user can grip or hold on to, thereby, during the manipluation, in particular after the freezing of the material to prevent the user from directly gripping the frozen material, but instead just manipulating the bag by gripping it or holding the mentioned flap configurated foil extension. In accordance with a further development of this embodiment of the pre-filled ice cube bag according to the present invention, the mentioned flap or flaps can have one or more apertures for the production of a handle in order to further ease the manipulation of the pre-filled ice cube bag with content both before and after the freezing.

The pre-filled ice cube bag according to the present invention is, in the presently preferred embodiment, implemented in accordance with the tearing technique which is described in the above mentioned Danish patent PR 172 638, similarly described in published international patent application No. WO 99/32840 and in published European patent application No. 0 927 859. Reference is made to these publications regarding the technical advantage obtained by using this tearing technique. Furthermore, it is preferred, as indicated in the following patent claims, that the pre-filled ice cube bag according to the present invention is implemented with a number of those characteristics which are described in the above mentioned Danish patent and the corresponding published international and European patent applications.

In the following the invention will be described in further details with reference to the drawing in which
Fig. 1 is a schematic and plane view of a first embodiment of a pre-filled ice cube bag according to the present invention and containing water,
Fig. 2 is a schematic and perspective view of the first embodiment shown in Fig. 1 of the pre-filled ice cube bag according to the present invention containing ice,
Fig. 3 is a perpendicular sectional view of the first embodiment of the pre-filled ice cube bag according to the present invention shown in Fig. 1,
Fig. 4 is a schematic and perspective view of a second embodiment of the pre-filled ice cube bag according to the present invention containing ice cubes and showing how the ice cube bag by physical manipulation can either be torn or alternatively be converted into a non-compartmentalised bag,
Fig. 5 is a schematic and perspective view of the second embodiment of the pre-filled ice cube bag according to the present invention shown in Fig. 4, after converting the ice cube bag into a non-compartmentalised bag with ice cubes lying freely in the interior of the bag, as schematically shown in Fig. 4,
Fig. 6 is a schematic, perspective and partly sectional view of a number of pre-filled ice cube bags with content packed in an external sealed and gas proof plastic packaging.
Fig. 7 is, corresponding to Fig. 6, a schematic, perspective and partly sectional view of the pre-filled ice cube bags with content contained in the external sealing and gas proof plastic packaging and further contained in an external fibreboard box shown in Fig. 6,
Fig. 8 is a schematic and perspective view of a third embodiment of the pre-filled ice cube bag according to the present invention with freezable content or mineral water and
Fig. 9 is, corresponding to Fig. 8, a schematic and perspective view of a fourth embodiment of the pre-filled ice cube bag according to the present invention with freezable material or mineral water and with foil extensions creating manipulation flaps with integrated handle.

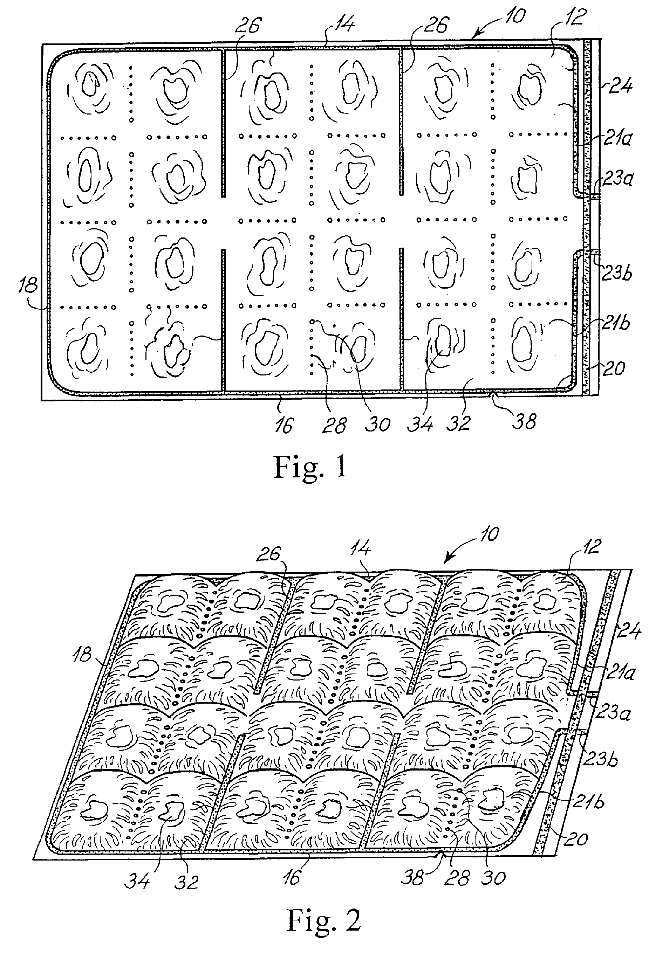

In Figs. 1 and 2, a first embodiment of a pre-filled ice cube bag according to the present invention is shown as a sectional view from above and in perspective, respectively, containing water, in particular mineral water, in Fig. 1 and containing, in Fig. 2, the mineral water in a frozen condition, i.e. in the configuration of ice cubes. The first embodiment of the pre-filled ice cube bag according to the present invention shown in Fig. 1 is in its entirety indicated by the reference numeral 10 and constitutes per se a modification of the ice cube bag which is shown and described with reference to Fig. 1a and 1b of the drawing in applicant's previous Danish patent PR 172 638 corresponding to published international patent application WO 99/32840 and European patent application 0 927 859.

The ice cube bag is composed of two identical plastic foils, preferably MDPE with a thickness of 35µm. Alternative materials to be used for the pre-filled ice cube bag according to the present invention are generally indicated in the above mentioned Danish patent and in the corresponding published international and European patent applications, the requirements for obtaining a necessary strength, however, in particular a resistance towards an inner maximum pressure, in general necessitates the use of stronger foils and larger weldings than indicated in the above mentioned Danish patent and the corresponding published international and European patent applications.

The two mentioned foils are mainly rectangular and only the upper foil is visible in Figs. 1 and 2. This foil is indicated by the reference numeral 12. The two foils which compose the ice cube bag 10 are welded together through two side weldings 14 and 16, a bottom welding 18 and two top weldings 21a and 21b which are continued in two parallel weldings 23a and 23b towards the right which in the non-filled condition for the ice cube bag item is continued in a filling funnel or a filling channel, through which the water, which is contained in the pre-filled ice cube bag shown in Fig. 1, is inserted. A linear welding 20 extends transversally over the two weldings 23a and 23b parallel to the external border 24 of the two sheet-shaped foils, the linear welding being produced after the ice cube bag item is filled with water and thus composing the hermetic sealing of the per-filled ice cube bag shown in Fig. 1. After the production of this linear sealing welding 20 a piece of the ice cube bag item shown in Fig. 1 and containing the above mentioned filling funnel or filling channel is cut off.

The actual filling of the pre-filled ice cube bag does not constitute a part of the present invention, as the filling can be carried out in arbitrary convenient way per se, either manually, mechanically or semi-mechanically, preferably, however, mechanically or automated, ensuring hereby that a specific filling into the filling level characteristic of the present invention in the individual ice cube bag is carried out to ensure that the pre-filled ice cube bag is not subsequently destroyed or teared during the transportation, the storage etc. or the freezing.

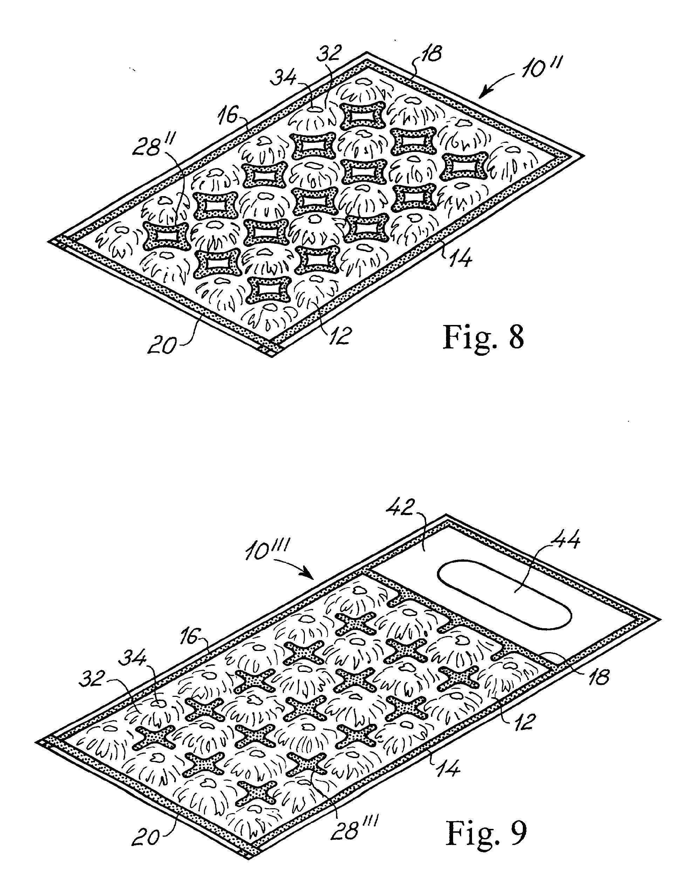

As already mentioned above, the ice cube bag item at the basis of the pre-filled ice cube bag 10 shown in Fig. 1 has a filling funnel or filling channel constituting an extension of the two weldings 23a and 23b and the introduction of the freezable material, preferably water into the interior of this ice cube item is carried out advantageously by means of a filling tube or a filling pipe which is introduced into this channel or this aperture. Other automated and mechanical filling techniques through a larger aperture in the ice cube bag item are also possible as it will appear from the description below with reference to Figs. 8 and 9, in which the ice cube bag items at the basis of these embodiments are filled in the entire part of the width of the ice cube bag item. The filling of the ice cube bag can be carried out with an arbitrary direction of the ice cube bag, i.e. either horizontally or vertically or in an sloped position, just like the actual filling can be carried out with the ice cube item in a non-evacuated state, an evacuated state or under simultaneous evacuation of the ice cube bag item.

At this stage it should be noted that expressions such as "upwardly", "downwardly", "upper", "lower", "horizontal", "perpendicular" etc. referring to the orientation of the ice cube bag in relation to a vertical orientation determined by the gravitational force are to be construed as expressions solely serving the purpose of describing the usual, general orientation of the ice cube bag in use, specially when it is being filled with water, as a larger or minor part of the ice cube bag may of course be folded in relation to a specific orientation, such as a vertical orientation, or the ice cube bag may in its entirety be held in a sloping position in relation to a specific orientation, e.g. in relation to the vertical orientation.

The pre-filled ice cube bag shown in Fig. 1 is divided into three sub-compartments which will in the following be designated the left, the middle and the right sub-compartments, respectively, two line weldings 26 extending from each of the two side weldings 14 and 16 towards the middle of the ice cube bag. These in total four line weldings have a length constituting less than half of the inner free width between the side weldings 14 and 16 so that between each pair of the line weldings 26, which are aligned, an aperture is configurated between the adjacent sub-compartments for allowing water to flow from the right sub-compartment, further down into the middle sub-compartment and still further down into the left sub-compartment.

The individual sub-compartments, i.e. the above mentioned three sub-compartments, the left, the middle and the right sub-compartment, respectively, are furthermore divided into eight ice cube compartments each by means of point weldings, four sets of perpendicular point weldings and three double sets of horizontal point weldings being provided in each of the three sub-compartments. In this context, the expression perpendicular point weldings is to be construed an expression not referring to the individual point weldings being horizontal, as the point weldings are of circular or approximately circular configuration, but on the contrary expressing that the line or other curve on which the point weldings are positioned, extend in a substantially perpendicular orientation shown in Fig. 1. Correspondingly, the expression horizontal point weldings is to be construed in the same way. As it is described in details in the above mentioned Danish patent and in the above mentioned published international and European patent applications, these point weldings serve as the purpose of producing a specific tearing possibility when the interior of the pre-filled ice cube bag, i.e. the water contained in the interior of the ice cube bag, is frozen. No further detailed description of the of this tearing technique will be given.

The point weldings dividing the three above mentioned sub-compartments into a total of 24 ice cube compartments are preferably larger than the point weldings which are described in the above mentioned Danish patent and Danish published international and European patent applications. Thus, the concerned point weldings are preferably of a size corresponding to a diameter of 1.5 mm for the production of a joint between the two foils in the individual point welding, which joining is sufficient in order to resist those influences that the individual point welding is subject to during the transportation and the manipulation, prior to the freezing of the water, due to the water contained within the interior of pre-filled ice cube bag. In Fig. 1, a single point shaped welding is designated the reference numeral 28 and this point welding is, as mentioned above, preferably of a size corresponding to a circle with a diameter of 1.5 mm. In Fig. 1, certain point weldings which are placed with a larger distance and constituting corner areas between the individual ice cube compartments designated the reference numeral 30, and these corner weldings being preferably larger than the point weldings 28 and thus of a size corresponding to a circle with a diameter of 2 mm or even a larger diameter. The reference numeral 28 designates an incision at the border of the two foil layers for the indication of a tearing of the pre-filled ice cube bag 10.

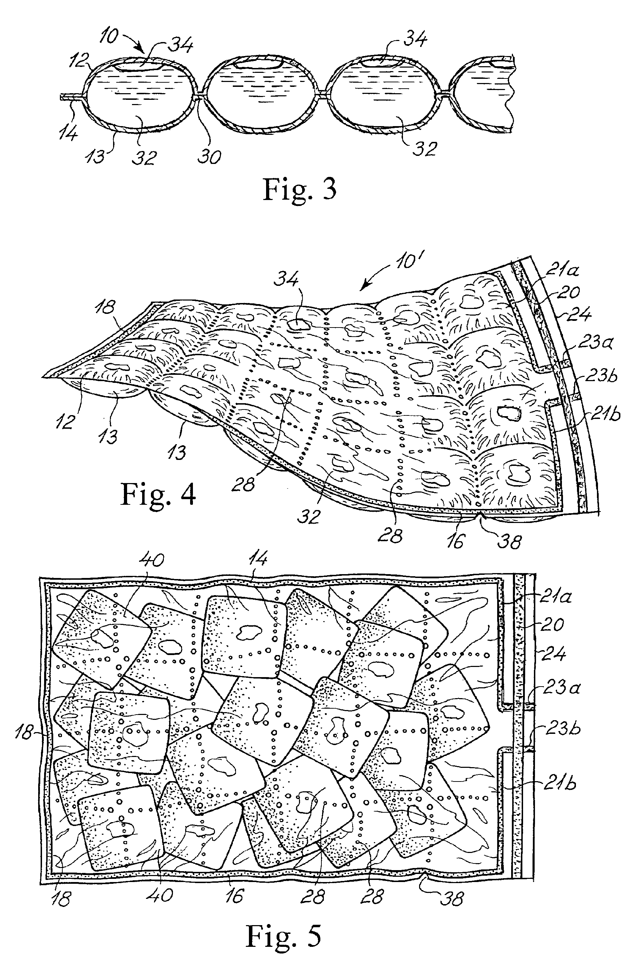

In Fig. 2, the pre-filled ice cube bag 10 shown in Fig. 1 is shown in perspective, subsequent to the freezing of the interior of the ice cube bag, i.e. the contained water, preferably mineral water, has been frozen for the configuration of a total of 24 ice cubes. Fig. 3 is a schematic view of a perpendicular section through the pre-filled ice cube bag 10 shown in Fig. 1, showing the top foil 12 similarly shown in Fig. 12, as well as the opposite bottom foil 13, the border welding 14 and a point welding 30 defining a single ice cube compartment, in which a volume of water 32 is contained. Above the water 32 a minor air pocket 34 is configurated.

Figs. 4 and 5 are illustrations of an alternative or second embodiment of the pre-filled ice cube bag according to the present invention. This second embodiment is designated the reference numeral 10' in its entirety, however, it is to be noticed that components or elements identical to components or elements described above with reference to Figs. 1-3 are designated the same reference numerals as above and will not be further discussed.

The second embodiment shown in Figs. 4 and 5 of the pre-filled ice cube bag according to the present invention 10' differs from the above mentioned first embodiment in that the inwardly turning line weldings 26 are omitted and substituted by point weldings corresponding to the above described horizontal and perpendicular point weldings 28 and 30.

Further, figs. 4 and 5 are illustrations of the advantageous possibility of manipulation which is further described in the above mentioned Danish patent PR 172 638 and correspondingly in the above mentioned published international patent application WO 99/32840 and published European patent application 0 927 859, after which the pre-filled ice cube bag with content can be manipulated for the converting of the bag from a compartmentalised bag with individually packed ice cube bags into a non-compartmentalised bag in which a number of individual ice cubes is contained. One of these ice cube bags is designated the reference numeral 40 in Fig. 5.

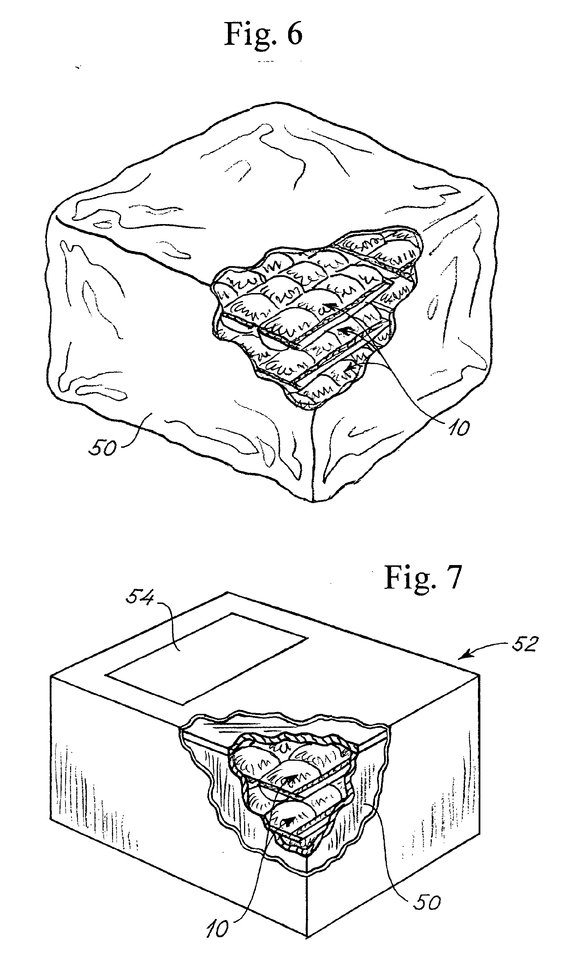

Fig. 6 is a schematic, perspective and partly sectional view of a number of pre-filled ice cube bags 10 contained in an external gas proof sealing 50 produced from a gas proof plastic foil, preferably PA or PP. This gas proof sealing primarily serves the purpose of producing supplementary safety, thus implying that a pre-filled ice cube bag which might leak during transportation and manipulation does not give off its content to the environment but keeps the content collected in the external tight sealing bag 50. As the pre-filled ice cube bags 10 are preferably produced from PE material, these bags are not in themselves gas proof, which is the reason why the water contained in the pre-filled ice cube bags in that case will give off gas to the environment or on the contrary take up gas, including odours from the environment, but the external hermetically sealing and gas proof packaging 40 prevents a such exchange of gas or odorants between the environment and the water contained in the pre-filled ice cube bags 10. In order to further ensure that the external gas proof and sealing plastic bag 50 is not destroyed by the sun light, in particular the UV radiation, and moreover to produce a total packaging easy to manipulate, the pre-filled ice cube bags 10 contained in the external sealing and gas proof plastic bag 50 are contained in a cardboard packaging 52. This cardboard packaging may, as shown in Fig. 7, be provided with an information area or a label 54 with information regarding the content of the contained pre-filled ice cube bags, the tapping time, production site, expected durability, manipulation conditions etc.

A third embodiment of the pre-filled ice cube bag with content according to the present invention is shown in Fig. 8. In Fig. 8, this third embodiment is designated the reference numeral 10" and elements or components identical to components or elements described previously are designated the same reference numerals as described above. Elements or components serving the same purpose as elements or components described above but differing regarding the appearance from the elements or components described previously are designated the same reference numeral as above, but added the marking ". Thus, the third embodiment of the pre-filled ice cube bag 10" shown in Fig. 3 mainly differs from the above described first embodiment 10 and the above described second embodiment 10' in that the concerned point weldings 28 and 30 are substituted by principally rhomboid configurated weldings 28" composed by a number of arched line segment weldings constituting a central non-welded area within these line weldings. Furthermore, the top welding 20 is established in direct contact with the side weldings 14 and 16, the third embodiment of the pre-filled ice cube bag shown in Fig. 8 being filled through the entire upper aperture and not through a separate inlet channel or inlet funnel as it is the case with the above described first embodiment and above described second embodiment.

In Fig. 9 is shown a fourth embodiment of the pre-filled ice cube bag according to the present invention. This fourth ice cube bag is designated the reference numeral 10" in its entirety and elements or components identical to components or elements described previously being identical to components or elements described previously are designated the same reference numerals as described above. Elements or components serving the same purpose as elements or components described above but differing in appearance from these previously described elements or components are designated the same reference numeral as used above, but added the marking "'.

Furthermore, the fourth embodiment shown in Fig. 9 differs from the third embodiment shown above with reference to Fig. 8 in that the rhomboid compartmentalised weldings 28" shown in Fig. 8 are substituted by cross configurated weldings 28"' and in that the two foils, from which the pre-filled ice cube bag is welded, is extended beyond the welding 18 constituting two flaps which are welded together constituting a manipulation flap 42 in which an aperture 44 is cut out constituting a handle. The flap 42 can alternatively or in addition be provided with an impression in the form of information, e.g. on the origin of the bag, the tapping time and the durability, conditions concerning the conservation of the bag etc. Such information can, together with the manufacturing company, the logo etc. be welded into the flap 42 or be printed on a separate label which is subsequently attached to the flap 42.

### EXAMPLE

A prototype of the first embodiment shown in Fig. 1 and 2 of the pre-filled ice cube bag according to the present invention was produced from two foils of 35 µm MDPE. Each of the 35 µm MDPE foils 12 and 13 had a width of 18 cm and a total length of 34 cm. The ice cube compartments of a total of 24 each had a width of 4.5 cm and a length of 4.8 cm. The point weldings 28 and 30 dividing the ice cube compartments were circular point weldings with a diameter of 1.5 mm and 2 mm, respectively. The prototype was filled with water at an amount of 280-300 cm³ corresponding to a filling of approximately 85% of the maximum of the inner volume of the pre-filled ice cube bag when it is subject to a maximum pressure of 2 m water column pressure.

Although the invention above has been described with reference to the presently preferred embodiments, it is obvious for people skilled in the art that the pre-filled ice cube bag with content of freezable material can be applied to other fields than the production of ice cubes, and similarly other materials, sizes etc. can be indicated by people skilled in the art. It is further to be noticed that the pre-filled ice cube bag can be sold in both frozen condition and in a non-frozen condition. In particular, the pre-filled ice cube bag may be produced in accordance with the configurations and geometries shown in Danish patent PR 172 638 and may further be produced in accordance with the technique shown in Danish patent PR 172 066. Such obvious modifications are thus to be considered as comprised by the present invention which might also be applied equivalently beyond the specifically indicated applications in the following claims.

## Claims

1. A pre-filled ice cube bag containing freezable material and comprising:
two sheet-shaped foil layers having substantially identical geometrical configurations and defining an outer periphery, where the two sheet-shaped foil layers each defines a surface area of a minimum of 75 cm², such as 75-150 cm², 150-300 cm², 300-600 cm², 600-1200 cm² or 1200-2400 cm² or alternatively an area between 75 cm² and 2400 cm², such as between 150 and 1200 cm², such as between 150 and 600 cm²,
a peripheral joint extending along said outer periphery of said foil layers, which peripheral joint joins said foil layers together mainly overlapping each other and defining a sealed inner chamber in the interior of said bag, in which inner chamber said freezable material is hermetically contained, which inner chamber defines a given inner volume when the two sheet-shaped foil layers are inflated to a maximum at a given maximum pressure of not less than 0.5 m water column pressure, preferably 0.5-1m or 1-1.5 m or 1.5-2 m water column pressure and divided into two or more ice cube compartments which are defined in relation to one another by separate joints of the foil layers where said inner volume constitutes a volume of a minimum of 50 cm³, such as 50-100 cm³, 100-200 cm³, 200-300 cm³, 300-400 cm³, 400-500 cm³, 500-1000 cm³ or 1000-2000 cm³ or alternatively between 50 and 2000 cm³, such as 100-1000 cm³, preferably between 100 and 500 cm³, and
which freezable material constitutes a filling of no less than 80% of said inner volume in a non-frozen condition, but less than 91%, such as 80%-91%, preferably 80-95%, 85%-87%, 87%-89% or 89%-91 %.

2. A pre-filled ice cube bag according to claim 1, **CHARACTERISED in that** the freezable material is contained in the pre-filled ice cube bag in an evacuated condition in the inner chamber.

3. A pre-filled ice cube bag according to claim 1, **CHARACTERISED in that** the freezable material is contained in said inner chamber in a non-evacuated condition in the inner chamber.

4. A pre-filled ice cube bag according to any of the claims 1-3, **CHARACTERISED in that** said freezable material is water, preferably mineral water and mainly bacteria free mineral water which is filled into the ice cube bag under bacteria free, hygienic and/or sterile conditions or that the freezable material constitutes an aqueous foodstuff such as a pasty material, e.g. ice cream, egg yolks, egg whites, cream, sauce, fruit juice, fruit purée, dairy products, such as milk, yoghurt or the like.

5. A pre-filled ice cube bag according to any of the claims 1-4, **CHARACTERISED in that** the individual ice cube compartment has a sub-volume which does not exceed 25 cm³, prefeably not exceeding 20 cm³ or additionally preferably is of the order of 10 cm³.

6. A pre-filled ice cube bag according to any of the claims 1-5, **CHARACTERISED in that** the sheet-shaped foil layers of the ice cube bag are produced from polyethylene, preferably LDPE, MDPE or HDPE or another glueable or weldable foil material, preferably plastic or polymer foil material or aluminium foil material or combinations of such foil materials, including laminated or co-extruded polymer materials.

7. A pre-filled ice cube bag according to any of the claims 1-6, **CHARACTERISED in that** the pre-filled ice cube bag is contained in an external, sealed and gas proof packaging, preferably a gas proof plastic bag, such as a plastic bag produced from PA, PP, laminated or co-extruded plastic foils or metallized PE or PVC.

8. A pre-filled ice cube bag according to claim 7, **CHARACTERISED in that** the sealed gas proof packaging is air filled.

9. A pre-filled ice cube bag according to claim 7, **CHARACTERISED in that** said sealed gas proof packaging is evacuated.

10. A pre-filled ice cube bag according to any of the claims 7-9, **CHARACTERISED in that** said sealed gas proof packaging contains a number of pre-filled ice cube bags, such as 2, 4, 6, 8, 10 or 12 pre-filled ice cube bags.

11. A pre-filled ice cube bag according to any of the claims 1-10, **CHARACTERISED in that** the number of ice cube compartments in the inner chamber of the ice cube bag is larger than 2, preferably 6, 8, 10, 12, 14, 16, 18, 20, 22, 24, 30, 36 or 48, preferably 24.

12. A pre-filled ice cube bag according to claim 11, **CHARACTERISED in that** the ice cube compartments in the interior of the ice cube bag is grouped in separate sub-chambers.

13. A pre-filled ice cube bag according to any of the claims 1-12, **CHARACTERISED in that** the number of separate joints defining two neighbour ice cube compartments in relation to each other constitutes an odd number or preferably an even number.

14. A pre-filled ice cube bag according to any of the claims 1-13, **CHARACTERISED in that** the peripheral joint and said separate joints are all constituted by glueings or prefeably weldings.

15. A pre-filled ice cube bag according to any of the claims 1-14, **CHARACTERISED in that** said separate joints have configurations of circles, ellipses, line segments, triangles, rectangles, squares, polygons, arbitrary convex or concave contour defining configurations or combinations of arbitrary ones of the above mentioned configurations constituting point weldings, line segment shaped weldings or plate-shaped weldings.

16. A pre-filled ice cube bag according to claim 15, **CHARACTERISED in that** the individual plane or area shaped joint has a central non-joined area.

17. A pre-filled ice cube bag according to any of the claims 1-16, **CHARACTERISED in that** the two sheet-shaped foil layers are mainly rectangular.

18. Pre-filled ice cube bag according to any of the claims 1-17, **CHARACTERISED in that** the two sheet-shaped foil layers are produced from the same foil material of the same thickness.

19. A pre-filled ice cube bag according to any of the claims 1-17, **CHARACTERISED in that** the two sheet-shaped foil layers are produced from different foil materials and/or produced from foil material or foil materials of different thickness.

20. A pre-filled ice cube bag according to claim 19, **CHARACTERISED in that** the first foil layer has a larger thickness than the second foil layer and that the first foil layer is pre-shaped with recesses corresponding to the individual ice cube compartments.

21. A pre-filled ice cube bag according to any of the claims 1-20, **CHARACTERISED in that** tearing perforations are provided for the indication of the tearing of the ice cube bag.

22. A pre-filled ice cub bag according to any of the claims 1-21, **CHARACTERISED in that** one of the sheet-shaped foil layers or both of the sheet-shaped foil layers at one end or one side has a foil extension or foil extensions for the production of a gripping flap for the manipulation of the pre-filled ice cube bag.

23. A pre-filled ice cube bag according to claim 22, **CHARACTERISED in that** one or more of said flaps have a central aperture to provide a handle for the manipulation of the pre-filled ice cube bag with content.

24. A pre-filled ice cube bag according to any of the claims 1-23, **CHARACTERISED in that** each of said separate joints establishes a connection between the two sheet-shaped foil layers with a such joining strength and a such limited area related extension that the concerned joint, when the foil layers are subject to a separating force, cannot itself break but will provide a tearing or a perforation in one of the foil layers along the periphery of the concerned joint.

25. A pre-filled ice cube bag according to claim 24, **CHARACTERISED in that** said separate joints are placed with a such internal distance that the separate joints when providing the tearings or the perforations of one of the foil layers provides indications for a tearing line in one of the foil layers.

26. A pre-filled ice cube bag according to claim 24 or 25, **CHARACTERISED in that** the factor calculated as the individual separate joining area expressed in square millimetres divided with the circumference or the perimeter, measured in millimetres, of the same joint, lies within the area of 0.025 mm and 0.5 mm, preferably within the area of 0.125 mm and 0-375 mm, such as approximately 0.25 mm.

27. A pre-filled ice cube bag according to any of the claims 1-26, **CHARACTERISED in that** each of said separate joints have an area related extension corresponding to the area of a circle with a diameter between 0.1 mm and 5 mm, such as 0.5 mm and 1.5 mm, preferably between 0.9 mm and 1.0 mm, such as between 0.5 and 0.8 mm, between 0.8 mm and 1 mm, between 1 mm and 1.2 mm or between 1.2 mm or 1.5 mm.
